# EUROPEAN PATENT SPECIFICATION

(11) **EP 1 863 738 B1**
(45) Date of publication and mention of the grant of the patent: **10.09.2008**
(21) Application number: 06711442.1
(22) Date of filing: 27.02.2006
(51) Int. Cl.: C01B 31/02

(54) **PROCESS OF FILLING NANOTUBE STRUCTURES, IN PARTICULAR CARBON NANOTUBES**
VERFAHREN ZUM FÜLLEN VON NANORÖHRENSTRUKTUREN, INSBESONDERE KOHLENSTOFFNANORÖHREN
PROCEDE DE REMPLISSAGE DE STRUCTURES DE NANOTUBES, EN PARTICULIER DE NANOTUBES EN CARBONE

(30) Priority: 01.04.2005 IT RM20050153
(43) Date of publication of application: 12.12.2007
(73) Proprietor: Consiglio Nazionale delle Ricerche, 00185 Roma (IT)
(72) Inventor: IMPERATORI, P. Ist. Struttura della Materia (ISM), I-00016 Monterotondo Stazione (RM) (IT); FOGLIA, S. Ist. Struttura della Materia (ISM), I-00016 Monterotondo Stazione (RM) (IT); CAPOBIANCHI, A. Ist. Struttura della Materia (ISM), I-00016 Monterotondo Stazione (RM) (IT)
(74) Representative: Iannone, Carlo Luigi
(86) International application number: PCT/IT2006/000119
(87) International publication number: WO 2006/103710

(56) References cited:
- J.SLOAN, J. HAMMER, M. ZWIEFKA-SIBLEY, M.L.H. GREEN: "The opening and filling of single walled carbon nanotubes (SWTs)" CHEM. COMMUN, 1998, pages 347-348, XP002381162
- J.MITTAL, M. MONTHIOUX, H. ALLOUCHE, O. STEPHAN: "Room temperature of single wall carbon nanotubeswith chromium oxide in open air" XHEMICAL PHYSICS LETTERS, no. 339, 2001, pages 311-318, XP002381163
- M. MONTHIOUX: "Filling single wall carbon nanotubes" CARBON, vol. 40, 2002, pages 1809-1823, XP002381164
- C-H. KIANG, J-S. CHOI. T.T. TRAN, A.D.BACHER: "Molecular nanowiresof 1 nm diameter from capillary filling of single walled carbon nanotubes" JOURNAL OF PHYSICAL CHEMISTRY B, vol. 103, 18 August 1999 (1999-08-18), pages 7449-7451, XP002381165

## Description

The present invention relates to a process of filling nanotube structures, preferably both single and multi wall carbon nanotubes, that allows such nanotube structures, i.e. having a high shape anisotropy wherein the base size is very much lower than their length, to be filled in a simple, reliable, and inexpensive way at low temperature with organic or inorganic materials, so that the outer walls of the filled structures lack external residuals.

In the emerging field of nanotechnologies, Carbon NanoTubes or CNT are, at least potentially, one of the most important and significant structures. It is known that CNTs are substantially cylindrical rolled-up sheets of graphene having diameter of few nm and length of 10-100 microns. The roll may constitute one single graphene wall (Single Wall Carbon Nanotubes or SWCNTs) or a plurality of walls (Multi Wall Carbon Nanotubes or MWCNTs).

Since discovery of CNTs, in particular multi-wall ones, in 1991, described by S.lijima in "Helical microtubules of graphitic carbon", Nature 354, pp. 56-58, the importance of these new materials in many scientific and technological fields was clear. Their specific properties, such as for instance their electrical conductivity, or mechanical strength, along with their size and their high length to diameter ratio, also called "aspect ratio", may be the starting point for nanotechnology development in multiple fields. Some examples of applications are tips for scanning tunneling microscopy or STM, chemical sensors, high density magnetic memories, super capacitors, components for nanoelectronics, stocking of hydrogen for fuel cells.

Filling of the cavities of CNTs with several materials has been always of great interest for the possibility of control and tailoring of the chemical-physical properties on a nanometric scale. So far some substances have been introduced by using several methods.

As described by S.C. Tsang, Y.K. Chen, P.J.F. Harris, and M.L.H. Green in "A simple chemical method of opening and filling carbon nanotubes", Nature 372 (1994), pp. 159-162, a first method provides for filling the nanotube cavities with solutions of salts or melted salts, followed by drying the CNTs. However, the synthesised material, that may be not organic, is also found on the outside of the tubes.

As described by B.V. Smith, M. Monthioux, and D.E. Luzzi in "Encapsulated C-60 in carbon nanotubes", Nature 396 (1998), pp. 323-324, a second method uses thermal diffusion of filling substances, i.e. the filling material is sublimated within the same cell wherein the CNTs are. However, the obtained filling is not homogeneous, there is no control over the material that deposits outside, and it may be used only for few, generally organic, substances, such as fullerene.

As described by Y.L. Hsin, K.C. Hwang, F.R. Chen, and J.J. Kai in "Production and in situ metal filling of carbon nanotubes in water", Adv. Mater. 13 (2001), pp. 830-833, metals may be introduced into CNTs through electro-chemical methods. However, besides the extreme specificity of the method, this may be applied only to nanotubes anchored to a conductive substrate.

B.K. Prandhan, T.Toba, T.Kyotani, and A.Tomita have disclosed in "Inclusion of Crystalline Iron Oxide Nanoparticles in Uniform Carbon Nanotubes Prepared by a Template Carbonization Method", Chem. Mater. 10 (1998), pp. 2510-2515, a single stage filling method, wherein the CNTs are grown simultaneously with a metal or a metal oxide, which is the same filler. The drawback is in the limitation of the starting material and in the poor growth control.

As described by X.R. Ye, Y. Lin, C. Wang, C. M. Wai, in "Supercritical Fluid Fabrication of Metal Nanowires and Nanorods Templated by Multi-walled Carbon Nanotubes", Adv. Mater. 15 (2003), pp. 316-319, and by Z. Liu, X. Dai, J. Xu, B. Han, J. Zhang, Y. Wang, Y. Huang, G. Yang, in Carbon 42 (2004), pp. 458-460, supercritical fluids may be used, which allow filling with several materials, ranging from metals to polymers. However, even this technique suffers from some drawbacks: besides the high cost, this method does not ensure the achievement of an outer surface lacking the filling material.

It is therefore an object of the present invention to provide a process that allows nanotube structures, i.e. having a high shape anisotropy wherein the base size is very much lower than their length, preferably both single and multi wall carbon nanotubes, to be filled in a simple, reliable, and inexpensive way at low temperature with organic or inorganic materials, so that the outer walls of the filled structures lack external residuals.

It is specific subject matter of the present invention a process of at least partially filling nanotube structures with at least one filling material, **characterised in that** it comprises the following steps:
A. having one or more nanotube structures;
B. immersing said one or more nanotube structures in a reaction bath comprising a solution including a first solvent and said at least one filling material, said at least one filling material being soluble in said first solvent, said reaction bath being at a first temperature T0 at which said solution is in liquid state;
C. freezing said reaction bath, leading it to a second temperature T1 of freezing;
D. sublimating said reaction bath, thus obtaining a first intermediate product;
E. immersing said first intermediate product in a second solvent in which said at least one filling material is insoluble, said second solvent being at a third temperature T0' at which said second solvent is in liquid state, thus obtaining a second intermediate product;
F. carrying out a solvent extraction, by washing said second intermediate product with said first solvent, thus obtaining a third intermediate product;
G. leading said third intermediate product to a fourth temperature T3 not higher than the minimum freezing temperature of said first and second solvents; and
H. sublimating said first and second solvents.

Always according to the invention, step B may be carried out with variations of pressure, preferably by means of a vacuum pump.

Still according to the invention, step B may be carried out with variations of said first temperature T0 within a temperature range where said solution is in liquid state.

Furthermore according to the invention, in step D said reaction bath may be maintained under vacuum, preferably by means of a rotary pump.

Always according to the invention, step D may be carried out at a fifth temperature T2 lower than said second temperature T1 of freezing.

Still according to the invention, the washing of step F may be carried out by stirring.

Furthermore according to the invention, the washing of step F may be carried out through a series of repeated operations of washing and filtering said second intermediate product.

Always according to the invention, said series of repeated operations may end when a qualitative assay carried out on said filtered second intermediate product indicates lack of said at least one filling material.

Still according to the invention, step H may be carried out under vacuum.

Furthermore according to the invention, said one or more nanotube structures of step A may be obtained through a preliminary step of opening the ends of one or more closed nanotube structures.

Always according to the invention, said first and second solvents may be selected from the group comprising organic solvents and inorganic solvents.

Still according to the invention, said first and second solvents may be selected from the group comprising polar solvents and apolar solvents.

Furthermore according to the invention, said second temperature T1 of freezing may be selected so as to cause an either uniform or discrete distribution of said at least one filling material within said one or more nanotube structures.

Always according to the invention, the concentration of said at least one filling material in said first solvent may be selected so as to determine the size of the nanoparticles of said at least one filling material within said one or more nanotube structures.

Still according to the invention, the process may comprise, after step H, the following step:
J. synthesising at least one second filling material starting from said at least one filling material, the latter operating as precursor.

Furthermore according to the invention, the synthesis of step J may comprise a reaction of the precursor with a gaseous reagent.

Always according to the invention, the synthesis of step J may comprise an immersion of the intermediate product obtained from step H in a second reaction bath comprising a solution including a third solvent and at least one reagent solute, the precursor reacting with said at least one reagent solute in correspondence of one or more selected areas of said one or more nanotube structures wherein the inside of these is accessible from outside.

Still according to the invention, said one or more selected areas of said one or more nanotube structures may correspond to said at least one open end.

Furthermore according to the invention, said at least one second filling material may be a magnetic material.

Always according to the invention, the precursor may be iron sulphate (FeSO₄), and said at least one second filling material may be magnetite (Fe₃O₄), obtained through reaction of potassium hydroxide (KOH) with iron sulphate.

Still according to the invention, said at least one filling material may be an either organic or inorganic material.

Furthermore according to the invention, said one or more nanotube structures may comprise Carbon nanotubes or CNTs, having single wall (Single Wall Carbon Nanotubes or SWCNTs) or multiple walls (Multi Wall Carbon Nanotubes or MWCNTs).

The present invention will now be described, by way of illustration and not by way of limitation, according to its preferred embodiments, by particularly referring to the Figures of the enclosed drawings, in which:
Figure 1 schematically shows an empty carbon nanotube to which a preferred embodiment of the process according to the invention is applied;
Figure 2 schematically shows the carbon nanotube of Figure 1 at the end of step B of the preferred embodiment of the process according to the invention;
Figure 3 schematically shows the carbon nanotube of Figure 2 at the end of step C of the preferred embodiment of the process according to the invention;
Figure 4 schematically shows the carbon nanotube of Figure 3 at the end of step H of the preferred embodiment of the process according to the invention;
Figure 5 shows two diffractograms, obtained through the X ray diffraction (XRD) technique, related to empty nanotubes and to nanotubes filled with cadmium sulphide;
Figure 6 shows an image, obtained through transmission electron microscopy (TEM), of a nanotube filled with cadmium sulphide;
Figure 7 shows a TEM image of a nanotube at the end of which a magnetite crystal is grown; and
Figure 8 shows two XRD diffractograms related to empty nanotubes and to nanotubes with magnetite at its end.

The chemical process according to the invention is particularly suitable for filling carbon nanotubes (CNT), but it should be understood that it may be also applied for filling any modelling structure, also called "templant" (i.e. that allows a material to fill it thus reproducing its shape and size), or any hollow structure presenting a high shape anisotropy, i.e. a high aspect ratio (length to diameter/base size ratio), still remaining within the scope of protection of the present invention.

In order to illustrate the process according to the invention, in the following of the description reference will be made, by way of example and not by way of limitation, to filling of multi wall CNTs (MWCNTs) with cadmium chloride (CdCl₂), precursor to the synthesis of cadmium sulphide (CdS).

The whole procedure has two stages: the first one concerns filling the MWCNTs; the second one concerns externally cleaning the MWCNTs and then transforming CdCl₂ into CdS.

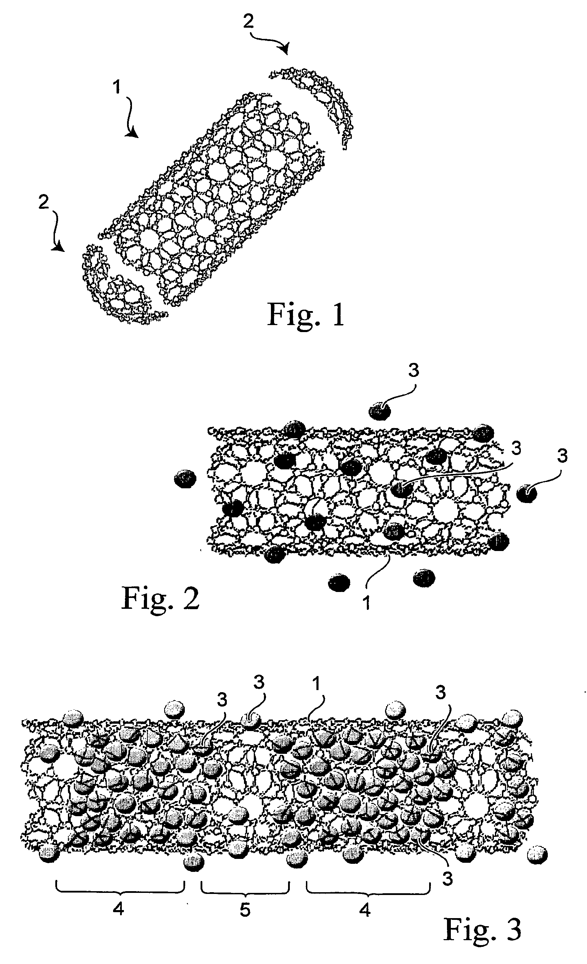

In order to carry out the filling of MWCNTs, it is necessary to take account of the fact that the MWCNTs are tubular structures with closed ends, which must be consequently opened. The graphene sheet by which the MWCNTs are constituted is formed by carbon (C) atoms, the hybridisation status of which requires an arrangement in six term rings, i.e. six C atoms, that entails the continuity of the structure. Instead, as shown in Figure 1, the bend points of the structure, which substantially correspond to the ends 2 of the nanotube 1, are constituted by five or seven term rings, which are less stable than the six term ones and, hence, the bend points are more chemically etchable by strong acids. The step of opening the MWCNT ends, employed in the preferred embodiment of the process according to the invention, is known from literature and consists of reflux treatment with 36% nitric acid (HNO₃), at temperature of 140°C, for 4 hours. Afterwards, the material is washed with water (H₂O) up to neutrality, and it is finally dried.

In the following step of the process, the open MWCNTs are immersed in an inorganic and polar, preferably aqueous, solution of the filling material, i.e. CdCl₂. During immersion, filling of the open nanotubes is obtained by capillarity. This is facilitated by variations of pressure, preferably carried out through the aid of a vacuum pump, and of temperature, limited within the range 20-90°C, for avoiding evaporation of the CdCl₂ aqueous solution.

The reaction bath is then frozen at a temperature T1, and in this step, in order to move the solvent, that is the water, away, the whole reaction bath is subjected to a sublimation process. As shown in Figure 2, this entails the deposition of the nanocrystals 3 of CdCl₂ both within the single nanotube 1 and on its outside. In the sublimation process, the reaction bath is frozen and maintained under vacuum, preferably through rotary pump, at a temperature T2 lower than the freezing one (T2 < T1). Freezing allows to "take a photograph" of the situation of uniform distribution of the solute (that is the CdCl₂) in the original aqueous solution and, hence, to hold it within the MWCNT 1, which uniformity is then found in the solid intermediate product obtained after the removal of water by sublimation.

In particular, the CdCl₂ distribution within the nanotube 1 also depends on the freezing temperature T1. In fact, if freezing occurs at the temperature of the liquid nitrogen, equal to about -70°C, a discrete distribution of substantially uniform portions 4 of CdCl₂ nanocrystals 3 within the MWCNT 1 will result, which portions 4 are separated from each other by substantially empty interspaces 5. This occurs because the solution, by freezing, undergoes a volume decrease from 0 to -70°C and it leaves gaps 5 in CdCl₂. instead, freezing at a higher temperature T1 entails a distribution of the CdCl₂ nanocrystals 3 that is uniform along the whole length of the nanotube 1.

In order to carry out the external cleaning of the MWCNTs 1, it is necessary to remove the CdCl₂ from the outside of the MWCNT walls.

To this end, the solid intermediate product obtained in the sublimation step of Figure 3 is first immersed in a second solvent in which the CdCl₂ is practically insoluble, preferably an organic and apolar solvent such as, for instance, benzene. The solvent enters the cavities of the MWCNTs 1 and around them.

At this point, by using again the first solvent of the first step, i.e. water, the process proceeds to a so-called "solvent extraction". II CdCl₂ distributes according to different proportions between benzene and water with a distribution coefficient much in favour of water. However, only the solute (CdCl₂) present on the outside of the MWCNTs 1 will be extracted, while the one being inside will be well protected by the benzene that, thanks to the repulsive forces between the two solvents water/benzene, at the interface between which there is a surface tension of 35.0 dine/cm, prevents water from entering the cavities for extracting the CdCl₂. At this point a filtering is made and the operation is repeated a plurality of times until a sensitive qualitative assay, in this case the assay of chlorides with AgNO₃, indicates a total lack of CdCl₂ in the washing water.

After the last washing, the wet filtrate is let to a temperature T3 lower than the freezing temperatures of both the solvents, which are then removed by vacuum sublimation.

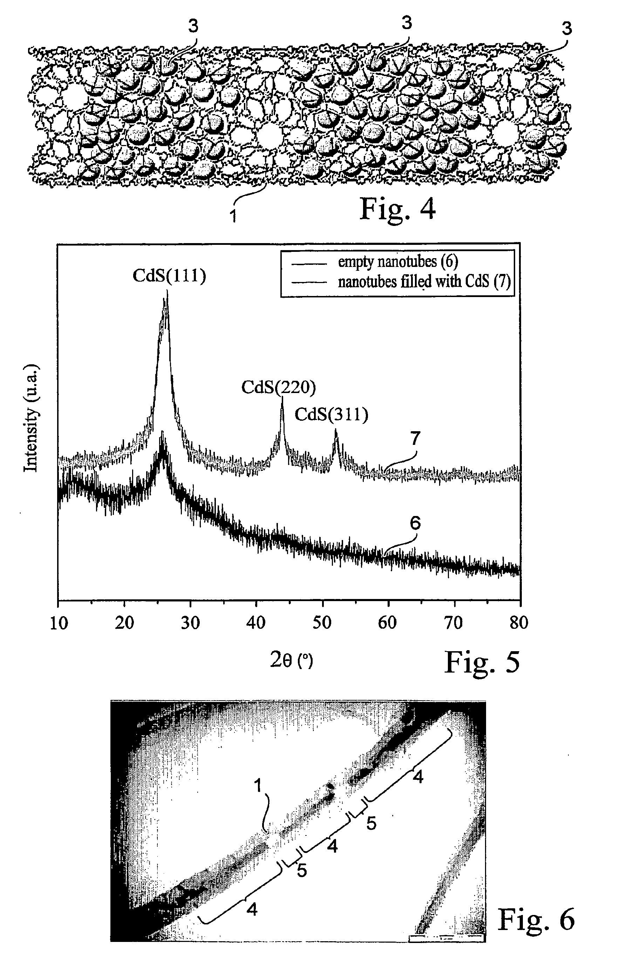

As shown in Figure 4, the MWCNTs 1 internally filled with CdCl₂ are thus obtained, while outside the material is free from any impurity.

Afterwards, it is possible to perform a procedure of obtaining the synthesis of CdS from the precursor CdCl₂ according to a known method. For instance, the MWCNTs 1 filled with CdCl₂ are made to react with gaseous hydrosulfuric acid (H₂S), according to the reaction:

CdCl₂ + H₂S(g) → CdS + 2HCl^{↑}

which releases gaseous hydrochloric acid.

The inventors have carried out tests on the MWCNTs 1 filled with CdS as obtained from this last synthesis step, by characterising them from the structural point of view through the X ray diffraction (XRD) technique and through the transmission electron microscopy (TEM).

Figure 5 shows the XRD diffractograms of the empty nanotubes (to which the lower curve 6 corresponds) and of the nanotubes filled with CdS (to which the upper curve 7 corresponds). As it may be observed, after filling, characteristic peaks of the CdS cube structure appear: in particular, CdS peak (111) overlaps peak (002) typical for MWCNTs.

In fact, in diffractogram 6 related to empty nanotubes only a one peak is present at 2θ ≈ 25.76°, that is identifiable with the reflection (002), typical for MWCNTs 1. Instead, the diffractogram 7 of the nanotubes filled with CdS highlights peaks at 2θ ≈ 43.96 and 52.08° and a rather wide peak at 2θ ≈ 26°, that is constituted of the sum of two peaks, one at 2θ ≈ 25.74° (corresponding to the reflection (002) of the MWCNTs) and the other one at 2θ ≈ 26.58°. By comparing the angular locations of the unknown peaks with those stored in the JCPDS-ICSS (Joint Committee on Powder Diffraction Standards - International Center for Diffraction Data) database, that collects hundreds of thousands of structures of crystalline phases, it has been possible to univocally identify the compound, as polycrystalline CdS. In fact, according to database card 75-1546, CdS peaks are identifiable as follows segue:

| | |
|---|---|
| 2θ(°) | (hkl) |
| 26.58 | (111) |
| 42.96 | (220) |
| 52.08 | (311) |

The diffractograms of Figure 5 show the difference between the empty nanotubes and the nanotubes after the filling process, highlighting the presence of CdS. These measurements are averaged over the whole sample of MWCNT, and, in order to determine the location of CdS within the nanotubes, TEM measurements have been performed.

In particular, the presence of CdS only within the nanotubes and not outside them has been unequivocally confirmed by the TEM images shown in Figure 6, where the discrete filling of the MWCNTs 1 in portions 4 separated from each other by substantially empty interspaces 5 is clearly shown.

In this regard, by properly adjusting the freezing temperature T1 of the first solution, it is possible to advantageously control the size of the interspaces 5 (and of the portions 4), so as, for instance, to exploit quantum effects, such as the tunnel effect between the portions 4 that ensures its electric conduction continuity.

The process according to the invention allows, once the MWCNT is filled, to make the reaction occur in a locally selective.

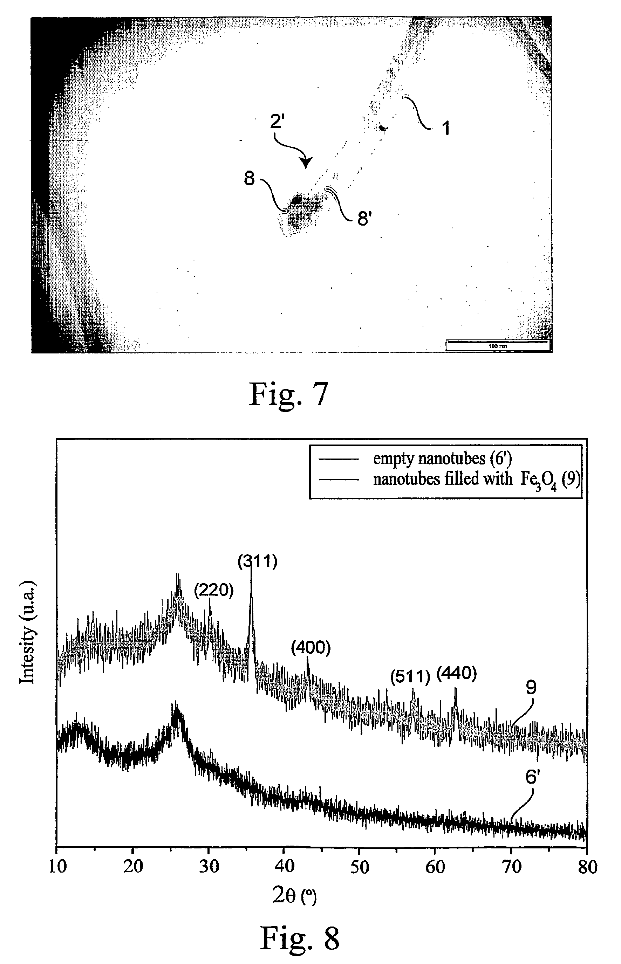

By way of example and not by way of limitation, Figure 7 shows a TEM image of a MWCNT 1 onto which a head 8 of magnetite (Fe₃O₄) is present that has been grown only at the open end 2' of the same MWCNT. This result is obtainable through a second preferred embodiment of the process according to the invention, whereby a different solid precursor is preliminarily deposited, similarly to what previously described, within the MWCNTs 1: iron sulphate (FeSO₄).

By then placing the nanotubes 1 in water, solubilisation of the salt occurs only inside.

Afterwards, by solubilising potassium hydroxide (KOH) outside, magnetite is obtained and the reaction site is just the open end 2' of the nanotubes 1, that is the aperture point of them, i.e. the contact point between the two solutions which diffuse into.

Figure 8 shows the XRD diffractograms of the empty nanotubes (to which the lower curve 6' corresponds) and of the nanotubes filled with Fe₃O₄ (to which the upper curve 9 corresponds). As it may be observed, after filling the characteristic peaks (220), (311), (400), (511) and (440) of the magnetite, as defined by the JCPDS-ICSS database card 85-1436, appear.

The TEM images of Figure 7 clearly show that the synthesis of Fe₃O₄ has occurred only in the open part of the ends 2' of the nanotubes 1, thus forming a crystal comprising a head 8 outside the nanotube 1 that is mounted, by means of a root 8', onto the nanometric aperture of the same nanotube 1.

It should be understood that the process according to the invention is also applicable to single wall CNTs or SWCNTs. In this case, it is generally not necessary to carry out an opening of the CNTs. In fact, in the case of MWCNTs, these must be opened since the plurality of side walls makes penetration of liquid solutions inside them substantially impossible. Instead, in the case of SWCNTs, the single side wall generally comprises defects which allow liquid solutions to penetrate inside them; therefore, in this case the step of opening the CNT ends is not essential. The same applies to nanotube structures (possibly also to specific MWCNTs) having defects and/or side apertures which allow liquid solutions to penetrate inside them.

The process according to the invention allows not only the filling of CNTs with inorganic materials, but also with organic materials, always by using a pair of solvents, one of which is capable to solubilise the chosen material and the other one may protect the filling. The vacuum evaporation of the solvent in both the main stages (i.e. of filling and of cleaning) ensures the uniformity of deposition inside the nanotube.

Other possibility offered by the method is that of operating with precursor solutions at either higher or lower concentrations. By modulating the concentration, it is possible to obtain different size of the filling nanoparticles, depending on the application for which the composite material is intended.

The applications of the process, and of the resulting filled nanotubes, are numerous.

By way of example, the filling with a catalytic material could lead to an increase of its properties, because uniformly distributed within a templant cavity. In this regard, it is already known the use of nanotubes for storing hydrogen. In fact, this gas is used in the promising technology of the fuel cells for motor transport, but its storing creates safety problems: CNTs are a promising material for this purpose. The possibility of filling with uniformly and finely distributed materials so as to offer a very large active surface with metals such as palladium could lead to an great improvement of performance.

A further application example is given by selective filling of CNT ends with magnetic material, as described above, that would allow a nanometric handling of CNTs on a macroscopic scale. Positioning of a single nanotube would be achievable by using anisotropic magnetic fields, allowing for instance nanoelectronic devices, such as, for example, transistors, FETs, single electron transistors, sensors, to be made. Some of these devices are presently made through the aid of an atomic force scanning microscopy (AFM) or tunnel effect scanning microscopy (STM) apparatus, and the cost is consequently not competitive with respect to the silicon technology in microelectronics. By means of the process according to the invention, instead, it is possible to make such devices at costs comparable with those of silicon microelectronics.

Furthermore, selective filling may improve the technology of the tips for scanning microscopy with particular features, for instance magnetic tips for high resolution magnetic force scanning microscopes (MFM).

Still, uniform and discrete filling with magnetic material may advantageously have applications in high density magnetic memories.

## Claims

1. Process of at least partially filling nanotube structures with at least one filling material, **characterised in that** it comprises the following steps:
A. having one or more nanotube structures (1);
B. immersing said one or more nanotube structures (1) in a reaction bath comprising a solution including a first solvent and said at least one filling material, said at least one filling material being soluble in said first solvent, said reaction bath being at a first temperature T0 at which said solution is in liquid state;
C. freezing said reaction bath, leading it to a second temperature T1 of freezing;
D. sublimating said reaction bath, thus obtaining a first intermediate product;
E. immersing said first intermediate product in a second solvent in which said at least one filling material is insoluble, said second solvent being at a third temperature T0' at which said second solvent is in liquid state, thus obtaining a second intermediate product;
F. carrying out a solvent extraction, by washing said second intermediate product with said first solvent, thus obtaining a third intermediate product;
G.leading said third intermediate product to a fourth temperature T3 not higher than the minimum freezing temperature of said first and second solvents; and
H. sublimating said first and second solvents.

2. Process according to claim 1, **characterised in that** step B is carried out with variations of pressure, preferably by means of a vacuum pump.

3. Process according to claim 1 or 2, **characterised in that** step B is carried out with variations of said first temperature T0 within a temperature range where said solution is in liquid state.

4. Process according to any one of the preceding claims, **characterised in that** in step D said reaction bath is maintained under vacuum, preferably by means of a rotary pump.

5. Process according to claim 4, **characterised in that** step D is carried out at a fifth temperature T2 lower than said second temperature T1 of freezing.

6. Process according to any one of the preceding claims, **characterised in that** the washing of step F is carried out by stirring.

7. Process according to any one of the preceding claims, **characterised in that** the washing of step F is carried out through a series of repeated operations of washing and filtering said second intermediate product.

8. Process according to claim 7, **characterised in that** said series of repeated operations ends when a qualitative assay carried out on said filtered second intermediate product indicates lack of said at least one filling material.

9. Process according to any one of the preceding claims, **characterised in that** step H is carried out under vacuum.

10. Process according to any one of the preceding claims, **characterised in that** said one or more nanotube structures (1) of step A have at least one open end (2).

11. Process according to claim 10, **characterised in that** said one or more nanotube structures (1) of step A are obtained through a preliminary step of opening the ends (2) of one or more closed nanotube structures.

12. Process according to any one of the preceding claims, **characterised in that** said first and second solvents are selected from the group comprising organic solvents and inorganic solvents.

13. Process according to any one of the preceding claims, **characterised in that** said first and second solvents are selected from the group comprising polar solvents and apolar solvents.

14. Process according to any one of the preceding claims, **characterised in that** said second temperature T1 of freezing is selected so as to cause an either uniform or discrete distribution of said at least one filling material within said one or more nanotube structures (1).

15. Process according to any one of the preceding claims, **characterised in that** the concentration of said at least one filling material in said first solvent is selected so as to determine the size of the nanoparticles (3) of said at least one filling material within said one or more nanotube structures (1).

16. Process according to any one of the preceding claims, **characterised in that** it comprises, after step H, the following step:
J. synthesising at least one second filling material starting from said at least one filling material, the latter operating as precursor.

17. Process according to claim 16, **characterised in that** the synthesis of step J comprises a reaction of the precursor with a gaseous reagent.

18. Process according to claim 16 or 17, **characterised in that** the synthesis of step J comprises an immersion of the intermediate product obtained from step H in a second reaction bath comprising a solution including a third solvent and at least one reagent solute, the precursor reacting with said at least one reagent solute in correspondence of one or more selected areas (2) of said one or more nanotube structures (1) wherein the inside of these is accessible from outside.

19. Process according to claim 18, **characterised in that** said one or more selected areas (2) of said one or more nanotube structures (1) correspond to said at least one open end (2).

20. Process according to claim 18 or 19, **characterised in that** said at least one second filling material is a magnetic material.

21. Process according to claim 20, **characterised in that** the precursor is iron sulphate (FeSO₄), and **in that** said at least one second filling material is magnetite (Fe₃O₄), obtained through reaction of potassium hydroxide (KOH) with iron sulphate.

22. Process according to any one of the preceding claims, **characterised in that** said at least one filling material is an either organic or inorganic material.

23. Process according to any one of the preceding claims, **characterised in that** said one or more nanotube structures (1) comprise Carbon nanotubes or CNTs, having single wall (Single Wall Carbon Nanotubes or SWCNTs) or multiple walls (Multi Wall Carbon Nanotubes or MWCNTs).

## Patentansprüche

1. Verfahren zum wenigstens teilweisen Füllen von Nanoröhrenstrukturen mit mindestens einem Füllmaterial, **dadurch gekennzeichnet, dass** es folgende Schritte umfasst:
A. Bereitstellung einer oder mehrerer Nanoröhrenstruren (1);
B. Eintauchen der einen oder mehreren Nanoröhrenstrukturen (1) in ein Reaktionsbad, das eine Lösung einschließlich eines ersten Lösungsmittels und des mindestens einen Füllmaterials aufweist, wobei das mindestens eine Füllmaterial in dem ersten Lösungsmittel lösbar ist und das Reaktionsbad sich auf einer ersten Temperatur T0 befindet, bei der die Lösung sich im Flüssigzustand befindet;
C. Gefrieren des Reaktionsbads, um es auf eine zweite Temperatur T1 des Gefrierens zu bringen;
D. Sublimieren des Reaktionsbads, um ein erstes Zwischenprodukt zu erhalten;
E. Eintauchen des ersten Zwischenprodukts in ein zweites Lösungsmittel, in dem das mindestens eine Füllmaterial unlöslich ist, wobei das zweite Lösungsmittel sich auf einer dritten Temperatur T0' befindet, bei der das zweite Lösungsmittel sich im Flüssigzustand befindet, um **dadurch** ein zweites Zwischenprodukt zu erhalten;
F. Durchführen einer Lösungsmittelextraktion durch Spülen des zweiten Zwischenprodukts mit dem ersten Lösungsmittel, um **dadurch** ein drittes Zwischenprodukt zu erhalten;
G. Überführen des dritten Zwischenprodukts auf eine vierte Temperatur T3, die nicht höher ist als die Mindestgefriertemperatur der ersten und beiden Lösungsmittel; und
H. Sublimieren der ersten und beiden Lösungsmittel.

2. Verfahren nach Anspruch 1, **dadurch gekennzeichnet, dass** der Schritt B mit Druckänderungen durchgeführt wird, vorzugsweise mitttels einer Vakuumpumpe.

3. Verfahren nach Anspruch 1 oder 2, **dadurch gekennzeichnet, dass** der Schritt B mit Änderungen der ersten Temperatur T0 innerhalb eines Temperaturbereichs durchgeführt wird, wo sich die Lösung im Flüssigzustand befindet.

4. Verfahren nach einem der vorhergehenden Ansprüche, **dadurch gekennzeichnet, dass** in Schritt D das Reaktionsbad unter Vakuum gehalten wird, vorzugsweise mittels einer Rotationspumpe.

5. Verfahren nach Anspruch 4, **dadurch gekennzeichnet, dass** der Schritt D bei einer fünften Temperatur T2 durchgeführt wird, die niedriger ist als die zweite Temperatur T1 des Gefrierens.

6. Verfahren nach einem der vorhergehenden Ansprüche, **dadurch gekennzeichnet, dass** das Spülen des Schritts F durch Rühren durchgeführt wird.

7. Verfahren nach einem der vorhergehenden Ansprüche, **dadurch gekennzeichnet, dass** das Spülen des Schritts F durch eine Reihe wiederholter Vorgänge des Spülens und Filterns des zweiten Zwischenprodukts durchgeführt wird.

8. Verfahren nach Anspruch 7, **dadurch gekennzeichnet, dass** die Reihe wiederholter Vorgänge endet, wenn eine mit dem gefilterten zweiten Zwischenprodukt ausgeführte qualitative Probe das Fehlen des mindestens einen Füllmaterials zeigt.

9. Verfahren nach einem der vorhergehenden Ansprüche, **dadurch gekennzeichnet, dass** der Schritt H unter Vakuum durchgeführt wird.

10. Verfahren nach einem der vorhergehenden Ansprüche, **dadurch gekennzeichnet, dass** die eine oder mehreren Nanoröhrenstrukturen (1) des Schritts A mindestens ein offenes Ende (2) haben.

11. Verfahren nach Anspruch 10, **dadurch gekennzeichnet, dass** die eine oder mehreren Nanoröhrenstrukturen (1) des Schritts A durch einen Vorschritt erhalten werden, bei dem die Enden (2) einer oder mehrerer geschlossener Nanoröhrenstrukturen geöffnet werden.

12. Verfahren nach einem der vorhergehenden Ansprüche, **dadurch gekennzeichnet, dass** die ersten und zweiten Lösungsmittel aus der organische Lösungsmittel und anorganische Lösungsmittel umfassenden Gruppe gewählt werden.

13. Verfahren nach einem der vorhergehenden Ansprüche, **dadurch gekennzeichnet, dass** die ersten und zweiten Lösungsmittel aus der polare Lösungsmittel und apolare Lösungsmittel umfassenden Gruppe gewählt werden.

14. Verfahren nach einem der vorhergehenden Ansprüche, **dadurch gekennzeichnet, dass** die zweite Temperatur T1 des Gefrierens so gewählt wird, dass eine entweder gleichförmige oder diskrete Verteilung des mindestens einen Füllmaterials innerhalb der einen oder mehreren Nanoröhrenstrukturen (1) verursacht wird.

15. Verfahren nach einem der vorhergehenden Ansprüche, **dadurch gekennzeichnet, dass** die Konzentration des mindestens einen Füllmaterials in dem ersten Lösungsmittel so gewählt wird, dass **dadurch** die Größe der Nanopartikel (3) des mindestens einen Füllmaterials innerhalb der einen oder mehreren Nanoröhrenstrukturen (1) bestimmt wird.

16. Verfahren nach einem der vorhergehenden Ansprüche, **dadurch gekennzeichnet, dass** es nach dem Schritt H den folgenden Schritt umfasst:
J. Synthetische Bildung mindestens eines zweiten Füllmaterials ausgehend von dem mindestens einen Füllmaterial, wobei das letztere als Vorläufer dient.

17. Verfahren nach Anspruch 16, **dadurch gekennzeichnet, dass** die synethetische Bildung im Schritt J eine Reaktion des Vorläufers mit einem gasförmigen Reagens umfasst.

18. Verfahren nach Anspruch 16 oder 17, **dadurch gekennzeichnet, dass** die synethetische Bildung im Schritt J ein Eintauchen des von dem Schritt H erhaltenen Zwischenprodukts in ein zweites Reaktionsbad umfasst, das eine ein drittes Lösungsmittel und mindestens einen gelösten Reagensstoff enthaltende Lösung aufweist, wobei der Vorläufer mit dem mindestens einen gelösten Reagensstoff in Übereinstimmung mit einem oder mehreren gewählten Bereichen (2) der einen oder mehreren Nanoröhrenstrukturen (1) reagiert, deren Innenseit von außen zugänglich ist.

19. Verfahren nach Anspruch 18, **dadurch gekennzeichnet, dass** der eine oder die mehreren gewählten Bereiche (2) der einen oder mehreren Nanoröhrenstrukturen (1) dem mindestens einen offenen Ende (2) entsprechen.

20. Verfahren nach Anspruch 18 oder 19, **dadurch gekennzeichnet, dass** das mindestens eine zweite Füllmaterial ein magnetisches Material ist.

21. Verfahren nach Anspruch 20, **dadurch gekennzeichnet, dass** der Vorläufer Eisensulfat (FeSO₄) ist, und dass das mindestens eine zweite Füllmaterial durch Reaktion von Kaliumhydroxid (KOH) mit Eisensulfat erhaltenes Magnetit (Fe₃O₄) ist.

22. Verfahren nach einem der vorhergehenden Ansprüche, **dadurch gekennzeichnet, dass** das mindestens eine Füllmaterial ein entweder organisches oder anorganisches Material ist.

23. Verfahren nach einem der vorhergehenden Ansprüche, **dadurch gekennzeichnet, dass** die eine oder mehreren Nanoröhrenstrukturen (1) Kohlenstoff-Nanoröhren oder CNTs umfassen, die nur eine Wand (Single Wall Carbon Nanotubes oder SWCNTs) oder mehrere Wände (Multi Wall Carbon Nanotubes oder MWCNTs) haben.

## Revendications

1. Procédé consistant à remplir, au moins partiellement, des structures nanotubulaires avec au moins un matériau de remplissage, **caractérisé en ce qu'**il comprend les étapes suivantes :
A. acquérir une ou plusieurs structures nanotubulaires (1) ;
B. immerger ladite ou lesdites une ou plusieurs structures nanotubulaires (1) dans un bain réactionnel comprenant une solution contenant un premier solvant et ledit au moins un matériau de remplissage, ledit au moins un matériau de remplissage étant soluble dans ledit premier solvant, ledit bain réactionnel se trouvant à une première température T0 à laquelle ladite solution se trouve à l'état liquide ;
C. congeler ledit bain réactionnel, jusqu'à une deuxième température T1 de congélation ;
D. sublimer ledit bain réactionnel, afin d'obtenir un premier produit intermédiaire ;
E. immerger ledit premier produit intermédiaire dans un deuxième solvant dans lequel ledit au moins un matériau de remplissage est insoluble, ledit deuxième solvant se trouvant à une troisième température T0' à laquelle ledit deuxième solvant se trouve à l'état liquide, afin d'obtenir un deuxième produit intermédiaire ;
F. réaliser une extraction par solvant, en lavant ledit deuxième produit intermédiaire avec ledit premier solvant, afin d'obtenir un troisième produit intermédiaire ;
G. amener ledit troisième produit intermédiaire à une quatrième température T3 inférieure ou égale à la température minimale de congélation desdits premier et deuxième solvants ; et
H. sublimer lesdits premier et deuxième solvants.

2. Procédé selon la revendication 1, **caractérisé en ce que** l'étape B est réalisée avec des variations de pression, de préférence au moyen d'une pompe à vide.

3. Procédé selon la revendication 1 ou 2, **caractérisé en ce que** l'étape B est réalisée avec des variations de ladite première température T0 au sein d'une plage de températures dans laquelle ladite solution se trouve à l'état liquide.

4. Procédé selon l'une quelconque des revendications précédentes, **caractérisé en ce que** dans l'étape D, ledit bain réactionnel est maintenu sous vide, de préférence au moyen d'une pompe rotative.

5. Procédé selon la revendication 4, **caractérisé en ce que** l'étape D est réalisée à une cinquième température T2 inférieure à ladite deuxième température T1 de congélation.

6. Procédé selon l'une quelconque des revendications précédentes, **caractérisé en ce que** le lavage de l'étape F est réalisé en procédant à une agitation.

7. Procédé selon l'une quelconque des revendications précédentes, **caractérisé en ce que** le lavage de l'étape F est réalisé par une série d'opérations répétées de lavage et de filtrage dudit deuxième produit intermédiaire.

8. Procédé selon la revendication 7, **caractérisé en ce que** lesdites séries d'opérations répétées s'achèvent lorsqu'une analyse qualitative effectuée sur ledit deuxième produit intermédiaire filtré indique un manque dudit au moins un matériau de remplissage.

9. Procédé selon l'une quelconque des revendications précédentes, **caractérisé en ce que** l'étape H est réalisée sous vide.

10. Procédé selon l'une quelconque des revendications précédentes, **caractérisé en ce que** ladite ou lesdites une ou plusieurs structures nanotubulaires (1) de l'étape A possèdent au moins une extrémité ouverte (2).

11. Procédé selon la revendication 10, **caractérisé en ce que** ladite ou lesdites une ou plusieurs structures nanotubulaires (1) de l'étape A sont obtenues par une étape préliminaire consistant à ouvrir les extrémités (2) d'une ou plusieurs structures nanotubulaires fermées.

12. Procédé selon l'une quelconque des revendications précédentes, **caractérisé en ce que** lesdits premier et deuxième solvants sont choisis dans le groupe comprenant des solvants organiques et des solvants inorganiques.

13. Procédé selon l'une quelconque des revendications précédentes, **caractérisé en ce que** lesdits premier et deuxième solvants sont choisis dans le groupe comprenant des solvants polaires et des solvants apolaires.

14. Procédé selon l'une quelconque des revendications précédentes, **caractérisé en ce que** ladite deuxième température T1 de congélation est choisie de manière à engendrer une répartition discrète ou uniforme dudit au moins un matériau de remplissage à l'intérieur de ladite ou desdites une ou plusieurs structures nanotubulaires (1).

15. Procédé selon l'une quelconque des revendications précédentes, **caractérisé en ce que** la concentration dudit au moins un matériau de remplissage dans ledit premier solvant est choisie de manière à déterminer la taille des nanoparticules (3) dudit au moins un matériau de remplissage à l'intérieur de ladite ou desdites une ou plusieurs structures nanotubulaires (1).

16. Procédé selon l'une quelconque des revendications précédentes, **caractérisé en ce qu'**il comprend, après l'étape H, l'étape suivante :
J. synthétiser au moins un second matériau de remplissage à partir dudit au moins un matériau de remplissage, ce dernier servant de précurseur.

17. Procédé selon la revendication 16, **caractérisé en ce que** la synthèse de l'étape J comprend une réaction du précurseur avec un réactif gazeux.

18. Procédé selon la revendication 16 ou 17, **caractérisé en ce que** la synthèse de l'étape J comprend une immersion du produit intermédiaire obtenu à partir de l'étape H dans un second bain réactionnel comprenant une solution avec un troisième solvant et au moins un soluté réactif, le précurseur réagissant avec ledit au moins un soluté réactif, en association avec une ou plusieurs zones sélectionnées (2) de ladite ou desdites structures nanotubulaires (1), dans lesquelles l'intérieur de ces dernières est accessible de l'extérieur.

19. Procédé selon la revendication 18, **caractérisé en ce que** ladite ou lesdites une ou plusieurs zones sélectionnées (2) de ladite ou desdites une ou plusieurs structures nanotubulaires (1) correspondent à ladite au moins une extrémité ouverte (2).

20. Procédé selon la revendication 18 ou 19, **caractérisé en ce que** ledit au moins un second matériau de remplissage est un matériau magnétique.

21. Procédé selon la revendication 20, **caractérisé en ce que** le précurseur est du sulfate de fer (FeSO₄), et **en ce que** ledit au moins un second matériau de remplissage est de la magnétite (Fe₃O₄), obtenue par réaction d'hydroxyde de potassium (KOH) avec du sulfate de fer.

22. Procédé selon l'une quelconque des revendications précédentes, **caractérisé en ce que** ledit au moins un matériau de remplissage est l'un ou l'autre d'un matériau organique ou inorganique.

23. Procédé selon l'une quelconque des revendications précédentes, **caractérisé en ce que** ladite ou lesdites une ou plusieurs structures nanotubulaires (1) comprennent des nanotubes de carbone ou CNT, ayant une paroi simple (nanotubes de carbone monoparois ou SWCNT) ou des parois multiples (nanotubes de carbone multiparois ou MWCNT).
